## Europäisches Patentamt
## European Patent Office
## Office européen des brevets

(19)

(11) Publication number: **0 029 639**
**B1**

(12)

# EUROPEAN PATENT SPECIFICATION

(45) Date of publication of patent specification: **05.09.84**

(21) Application number: **80301926.4**

(22) Date of filing: **09.06.80**

(51) Int. Cl.³: **B 29 D 23/03,** B 29 C 17/07, B 65 D 1/02

(54) **Plastics container, method of forming same, a preform for use in forming the container and a mold unit for forming the preform.**

(30) Priority: **27.11.79 US 97603**
**27.11.79 US 97605**
**30.11.79 US 99057**

(43) Date of publication of application:
**03.06.81 Bulletin 81/22**

(45) Publication of the grant of the patent:
**05.09.84 Bulletin 84/36**

(84) Designated Contracting States:
**BE CH DE FR GB IT LI LU NL SE**

(56) References cited:
**DE-B-1 138 521**
**DE-U-7 202 405**
**US-A-3 367 554**
**US-A-3 881 621**
**US-A-4 005 245**
**US-A-4 108 324**

(73) Proprietor: **THE CONTINENTAL GROUP, INC.**
**633 Third Avenue**
**New York, New York 10017 (US)**

(72) Inventor: **Krishnakumar, Suppayan M.**
**23 Old Coach Road**
**Nashua, New Hampshire 03060 (US)**
Inventor: **Pocock, John F.E.**
**Gravenbruch, Meisenstrasse 1, VI**
**D-6078 Neu-Isenburg/Hessen (DE)**
Inventor: **Friendship, Kenneth F.M.**
**36 Portwine Road**
**Clarendon Hills, Illinois, 60514 (US)**
Inventor: **Mahajan, Gautam K.**
**10 Whitman Road**
**Nashua, New Hampshire 03060 (US)**

(74) Representative: **Hallam, Arnold Vincent et al**
**E.N. LEWIS & TAYLOR 144 New Walk**
**Leicester LE1 7JA (GB)**

Courier Press, Leamington Spa, England.

## Description

This invention relates in general to new and useful improvements in plastics bottles, and more particularly to the reinforcement of the bottom of plastics bottles suitable for containing liquids under pressure such as carbonated beverages and having so-called champagne bottle bottom structures.

In the construction of plastics bottles of the so-called champagne bottom type which incorporates an inverted dome connected at its base to the lower edges of the side wall of the bottom, the problem is that inevitably in the blow molding process the juncture area between the base of the inverted dome and the side wall stretches and becomes thinned out. Also, this juncture area is subjected not only to tensile stresses but to severe dome load since the inverted dome tends to revert from generally hemispherical shape into what is commonly known as a bulged bottom and the bottom becomes a rocker in that it will not stand up straight. In the juncture area the compressive stresses on the dome section are changed to tensile stresses and to flexural (bending) stresses. Since the plastics material is weakest in tension, the critical tensile stresses are reached first, and they are followed by critical flexural stresses before critical compressive stresses develop.

The bottling of carbonated beverages in plastics material bottles presents a number of problems, many of which arise in connection with the base or bottom structure of the bottle. The mere duplication in plastics of traditional glass bottle bottom configurations is unsatisfactory because of the tendency of plastics materials to creep or become distorted under pressure, especially in the presence of elevated temperatures which may be encountered during curing, shipment and storage. Such distortions may alter the shape and dimensions of the traditional bottom configuration to the extent that the liquid level within the bottle falls below the normal fill line, thereby raising a question by a customer as to whether he is receiving full quantity. In addition, the bottom or base of the bottle may become distorted so as to become unstable when seated on a flat surface.

The foregoing weaknesses of champagne type bottoms in plastics bottles have been recognised in the past, and reference is made to United States Patent No. 3,881,621 granted July 2, 1973 to Domas Adomaitis. This patent proposes to solve the inherent weakness problem of champagne type bottoms in plastics bottle by reinforcing the juncture section by way of an internal circumferential rib or reinforcing ring.

While the continuous reinforcing ring does generally solve the problem, in order that the flexure across all of the affected area may be restricted, it is necessary that the reinforcing ring be somewhat larger than that shown in the Adomaitis patent, and as a result considerable material is required in the formation of the reinforcing ring. Unfortunately, the amount of material used in a plastics bottle is critical from a commercial standpoint in that plastics bottles must, of necessity, be economically competitive with other types of containers.

United States Patent No. 4005245 discloses the use of a preform in which ribs are formed on the inner surface. However, these ribs extend over the whole length of the preform in contact with the complementary mandrel and serve to ensure firm contact of the whole of the preform inner surface with the mandrel surface when vacuum is applied between the two, the ribs being smoothed out as the preform is heated.

United States Patent No. 4108324 discloses a plastics container whose base is provided with reinforcing ribs, these being hollow external ribs formed when a plain preform is blown in a suitably shaped mold.

The present invention provides a preform for use in the blow molding of a plastics material bottle having an internal reinforcing rib arrangement, characterised in that said preform is formed of a plastics material and includes a tubular lower portion terminating in a closed end, and an arrangement of longitudinally extending ribs integrally formed on the inner surfaces of only said tubular lower portion.

The present invention also provides a mold unit for injection molding a plastic material preform for a blow molded bottle wherein the preform has an internal arrangement of longitudinally extending ribs, characterised in that the mold unit has a mould core member having a lower portion terminating in an end portion, and an arrangement of longitudinally extending rib-defining grooves of limited longitudinal extent formed only in said core member lower portion, said grooves having longitudinally open lower ends.

The present invention further provides a method of forming a plastics material bottle having a bottom provided with radially extending internal stiffening ribs, characterised in that said method comprises the steps of providing an injection mold unit including a cavity-defining mold member and a core member in said cavity with said core member having an arrangement of rib-defining grooves in a lower portion only thereof; injection molding a plastic material tubular preform in said cavity around said core member with said preform having a bottle bottom defining lower portion with internal longitudinally extending ribs, terminating in said bottom portion, in accordance with said core member grooves; and then blow molding said preform in a blow mold to define a bottle having a bottom with radially extending internal stiffening ribs which terminate in said bottom.

The present invention still further provides a method of increasing the wall thickness of a bottom structure of a blown plastics material container, characterised in that said method comprises the steps of forming a preform including a generally hemispherical bottom portion and internal ribs extending axially from said bottom portion in the area of the preform which corresponds to the bottom structure of the container, inserting the preform within a blow mold for the container, holding an upper end of said preform against movement and moving the preform bottom portion axially to axially stretch said preform with said stretching primarily occurring in an intermediate portion of said preform as opposed to occurring in the bottom portion of said preform, and thereafter blow molding said preform to form a container having a thicker than normal bottom structure.

The present invention still further provides a blow molded plastics bottle for beverages, said bottle being of the type including a tubular body portion and an integral bottom structure, said bottom structure including an internal axially inwardly directed generally conical portion and a generally arcuate cross-sectional axially inwardly opening base ring, characterised in that said conical portion and said base ring are reinforced by a plurality of circumferentially spaced radially extending ribs integrally formed on the interior of both said generally conical portion and said base ring and bridging said base ring and terminating in said bottom structure, and said ribs form means resisting thinning of said generally conical portion and said base ring during blow molding of said bottle and providing for a greater wall thickness of said generally conical portion and said base ring between said ribs than in a like bottle formed in the same blow mold with the same preform but without ribs.

The radial extent of the ribs may be varied, although it has been found that basically the best reinforcement is obtained when the ribs extend from the part-spherical downwardly sloping part of the bottom across the base ring or juncture section and up the domes or conical portion of the bottle, terminating in spaced relation to the actual dome of the domed portion. On the other hand, it is also feasible to restrict the ribs substantially to the juncture section.

It has also been found that it may be economically feasible to form the ribs of more material so that the ribs are upstanding and therefore are in the path of a liquid product being placed within the bottle. The ribs provide for suitable guidance of the liquid product so as to hold turbulence in the liquid to a minimum and thereby facilitate rapid filling.

The preform according to the present invention can be readily formed with a minor change in existing equipment and the desired rib reinforced bottom bottle can be formed utilizing the same equipment as heretofore utilized in the forming of an identical bottle but without the stiffening ribs.

The axial extent of the ribs may be varied and, when a minimum of reinforcement is desired, the ribs may be substantially entirely on the hemispherical bottom part of the preform and located so that when the preform is blown into a bottle the ribs will be primarily at the reverse turn between the generally cylindrical outer part of the bottom and the upwardly and inwardly directed conical portion.

On the other hand, the ribs may be quite pronounced on the preform and extend further radially inwardly adjacent the extreme bottom of the preform so that in the blown bottle the ribs are rather pronounced and extend almost to the center of the bottom. In such event, the ribs may have a beneficial effect on the filling of the bottle in that they will control the swirling of the liquid as it is directed against the bottom portion of the resultant bottle.

An additional advantage is obtained when the preform is initially longitudinally stretched by means of a stretch rod prior to the blowing of the preform within the associated mold. It has been found that the forming of the bottom structure of the preform with the axial ribs strengthens the bottom portion to the extent that when the preform is initially stretched to lengthen the preform, in lieu of the bottom structure thinning in the same amount as does the intermediate portion of the preform which forms the bottle body, the bottom structure is stiffened by the ribs and is stretched only a minimum with the stretching occurring primarily in the intermediate portion of the preform. Since the bottom portion of the preform is not stretched, two advantageous features occur. First, the body of the preform is thinned which is permissible as far as the central strength of the resultant bottle body is concerned. Secondly, since the bottom portion of the preform is not axially stretched, the bottom of the resultant bottle has the added material therein which is normally removed by stretching. The result is that by the provision of a small quantity of additional plastics material for the ribs, many times the weidht of that material is retained within the bottom structure of the preform and thereby the bottom of the bottle is strengthened without the addition of a relatively large amount of plastics material in the preform.

The present invention is further described hereinafter, by way of example, with reference to the accompanying drawings, in which:

In the Drawings

Figure 1 is an elevational view of a plastics bottle formed in accordance with this invention.

Figure 2 is an enlarged horizontal sectional view taken generally along the line 2—2 of Figure 1, and shows the bottom structure in plan and most specifically illustrates the arrangement of the ribs.

Figure 3 is a fragmentary vertical sectional view taken generally along the line 3—3 of Figure 2, and shows generally the cross section of the ribs.

Figure 4 is a fragmentary vertical sectional view taken generally along the line 4—4 of Figure 2, and shows a typical rib in elevation.

Figure 5 is an enlarged sectional view transversely of one of the ribs, taken along the line 5—5 of Figure 3, and shows a typical rib cross section.

Figure 6 is a transverse sectional view taken through the bottom of a modified bottle, formed from the preform of Figure 18, and shows a modified rib arrangement.

Figure 7 is an axial sectional view taken generally along the line 7—7 of Figure 6, and shows the cross section of the bottom and the location of the ribs therein.

Figure 8 is another fragmentary vertical sectional view similar to Figure 3, and shows still another form of rib configuration formed from the preform of Figure 16.

Figure 9 is an elevational view of a preform for forming bottles in accordance with this invention, a lower portion of the preform being broken away and shown in section.

Figure 10 is a vertical sectional view on a smaller scale, showing the manner in which the preform of Figure 9 is formed by injection molding.

Figure 11 is an enlarged fragmentary elevational view of the lower portion of a mold core member especially configured for forming internal ribs on the preform, a portion of the core member being broken away and shown in section to illustrate the details of rib forming grooves formed therein.

Figure 12 is a transverse sectional view taken generally along the line 12—12 of Figure 11, and shows the groove arrangement in the core member.

Figure 13 is an enlarged transverse sectional view taken generally along the line 13—13 of Figure 9, and shows the internal rib arrangement in the preform.

Figure 14 is an enlarged fragmentary vertical sectional view taken generally along the line 14—14 of Figure 13, and shows the specific internal rib configuration.

Figure 15 is a schematic view showing the manner in which a champagne bottom bottle is formed in accordance with this invention using the preform of Figure 9.

Figure 16 is a vertical sectional view taken through the lower portion of a modified form of preform, and shows the general rib construction thereof.

Figure 17 is a transverse full horizontal sectional view taken generally along the line 17—17 of Figure 16, and shows the specific details of the ribs.

Figure 18 is a sectional view similar to Figure 16, and shows a preform with still a further rib formation.

Figure 19 is a fragmentary axial sectional view taken through a mold for molding a bottle of the type shown in Figure 1, and having associated therewith a preform having incorporated therein bottom strengthening ribs.

Figure 20 is a sectional view similar to Figure 19, and shows the preform axially stretched by means of a stretch rod and the thinning of the intermediate portion of the preform as a result of such stretching being exaggerated.

Figure 21 is a sectional view similar to Figure 3, and shows a modified bottom structure formed in accordance with this invention.

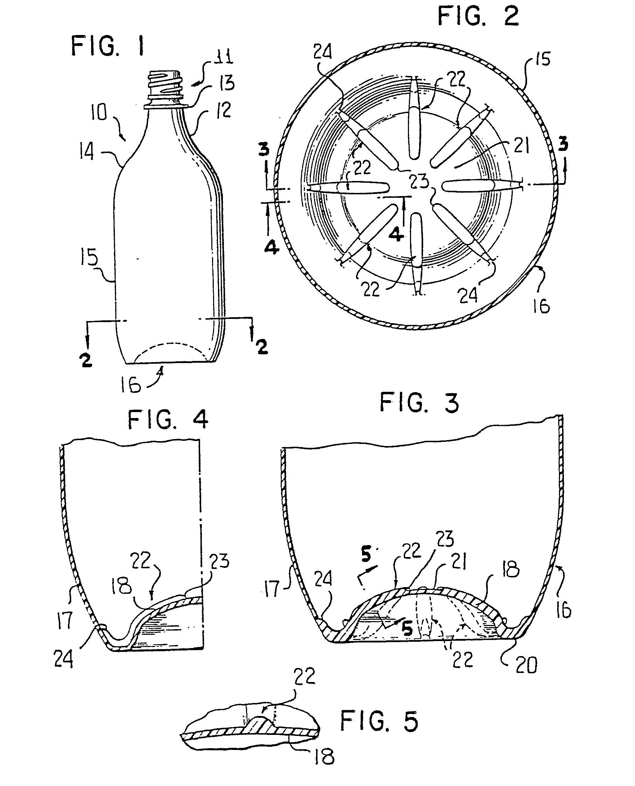

Referring now to the drawings in detail, it will be seen that there is illustrated in Figure 1 a typical bottle formed of plastics material and including a champagne type bottom in accordance with this invention. The bottle is generally identified by the numeral 10 and the proportions of the bottle are those of one generally of a one liter capacity. The proportions of the bottle 10 in no way have anything to do with this invention. The bottle 10, merely for identification purposes, includes a threaded neck finish 11, a neck 12 having an outwardly directed support flange 13, a flaring shoulder area 14, and a generally cylindrical body 15. The body 15 terminates at its lower end in a champagne type bottom generally identified by the numeral 16.

Referring now to Figure 3, it will be seen that the bottom 16 includes an outer preferably part-spherical section 17 which is joined to the lower end of the body 15. The bottom 16 also includes an inner domed section 18 which is joined to the outer section 17 by a juncture section 20. The domed section 18, by the very nature of the formation of the bottle 10, includes an uppermost dome porttion 21 which is normally of a thicker configuration than the remainder of the domed section 18.

The above described bottom 16 is a typical champagne type bottom and as described above is under high internal pressures within the bottle 10, such as exist when the liquid product is a carbonated beverage, applying high force on the domed section 18 urging the domed section 18 to revert so that the bottom will assume a generally hemispherical configuration. Further, since the bottles are intended to have a shelf life and there is a creep factor involved, there is a further tendency of the bottom structure to deform under the influence of time and pressure. Such gradual deformation of the bottom does not necessarily detract from a standpoint of either appearance or structural strength, but increases the volume of the bottle with the result that the fill line in the bottle drops and the bottle gives the general appearance of not having been completely filled.

It is therefore highly desirable that the bottom 16 be reinforced so that the configuration of the bottom remains substantially stable. It is also necessary that the amount of material used in obtaining such reinforcement be held to a minimum, otherwise the cost of reinforcement will exclude the bottom from a commercial competition standpoint.

In accordance with this invention, it is proposed to reinforce the bottom 16 by providing on the internal surface of the bottom a plurality of circumferentially spaced radiating ribs 22, as is best shown in Figure 2. Preferably there will be eight ribs, as shown, although this number could obviously be varied depending upon rib size, bottle size, etc. Each of the ribs, as is best shown in Figures 2 and 4, extends from the lower part of the outer section 17 across the juncture section 20 and then across the domed section 18 to a point spaced from but adjacent to the domed portion 21. Each rib 22, as is best shown in Figure 5, is preferably of a rounded cross section, broadly speaking the cross section of one-half of an oval or ellipse.

It is to be noted also that the ribs 22 are of a generally streamlined configuration having a rounded radially inner nose portion 23 and rapidly increasing in width therefrom and thereafter gradually tapering toward a tail end 24. The configuration of the ribs 22 is as a result of the stretching of the plastics material in the blow molding formation of the bottom 16. However, the rib configuration illustrated in Figure 2 has produced highly desirable results. In a bottom structure weighing on the order of 12—13 grams the addition of one-half gram of material for the ribs 22 has been found sufficient to cure deficiencies of previously formed identical appearing bottles without the ribs.

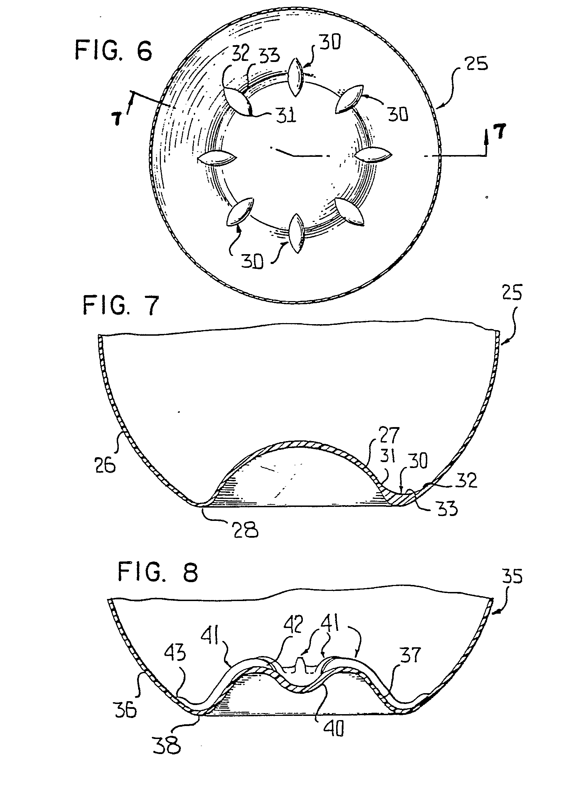

Reference is now made to Figures 6 and 7 wherein a modified bottom structure, generally identified by the numeral 25, is illustrated. The bottom structure 25, like the bottom 16, is of the champagne bottle type and includes an outer part-spherical section 26 and an inverted inner section 27 which are joined together by a juncture section 28. The bottom 25 is reinforced by a plurality of radially extending ribs 30. However, as is clearly shown in Figures 6 and 7, the ribs 30 extend substantially only in the area of the juncture section 28 although, as is clearly shown in Figure 6, end portions of the ribs do extend into overlying relation to both the outer section 26 and the inner section 27.

The ribs 30, like the ribs 22, are eight in number, and while it is thought that this is perhaps the best number, other numbers of ribs will suffice.

Each of the ribs 30 is of a generally streamlined configuration and each rib 30 has a generally pointed outer end 31 and a like pointed or rounded outer end 32 with a widest portion 33 in the longitudinal center thereof. Each rib 30 is also of a rounded cross section such as generally shown with respect to the rib 22 in Figure 5, although basically speaking the ribs 30 may be flatter than the ribs 22 in proportion to their height.

Reference is now made to Figure 8 wherein yet another form of bottom structure, generally identified by the numeral 35, is shown. The bottom structure 35 includes an outer part-spherical section 36 and an inner domed section 37. The sections 36 and 37 are joined by a juncture section 38. The illustrated domed inner section 37 has the central portion thereof further inverted so that it has a downwardly extending central part 40. It is feasible, however, that the domed inner section 37 be a full dome as shown in Figures 3 and 7.

The bottom 35 is reinforced by a plurality of radiating ribs, each generally identified by the numeral 41. The ribs 41 are more pronounced than the ribs 22 and 30 and are upstanding as is clearly evidenced from Figure 8. The ribs 41 are generally rectangular in cross section and have rounded decreasing height inner ends 42 and outer ends 43. It is to be noted that the ribs 41 extend partially up in the outer bottom section 36 and from there across the juncture section 38 and into the central portion 40 of the domed inner section 37.

In the illustrated embodiment of the invention there are but six of the ribs 41. However, it is to be once again understood that the number of ribs may be varied in accordance with the stiffening requirements of the bottle.

The ribs 41, in contradiction to the ribs 22 and 30, require a considerable amount of plastic material in the formation thereof. However, the ribs 41 are not intended solely for the purpose of reinforcing the bottom against reverting of the domed inner section 37. It has been found that the ribs 41 materially aid in the flow of a liquid product into the bottle so that turbulences are greatly reduced and thus the filling of the bottle with the ribs 41 may be greatly expedited. It may well be that the time saved in the filling operation will more than compensate for the slightly added cost of the additional material required for the ribs 41 as compared with that required for the ribs 22. Further, it is to be noted that with the greater stiffness afforded by each of the ribs 41, the number, as indicated above, has been reduced from eight to six, thereby providing for some equalization in the amount of material required.

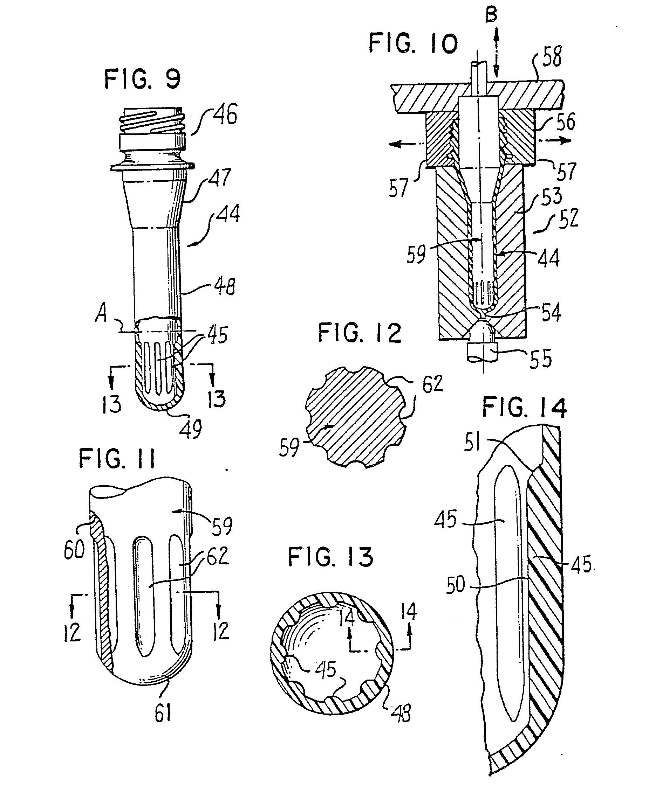

This invention also relates to the provision of a simple preform for forming the bottle 10, the preform being identified by the numeral 44 and being specifically illustrated in Figure 9. The preform 44 is of a conventional configuration for forming a champagne bottom bottle except for the provision of internal ribs 45 which are circumferentially spaced and which extend longitudinally of the preform. Most specifically, the preform 44 includes an upper neck finish 46, a tapering upper portion 47, and a cylindrical lower portion 48 which terminates in a closed end 49 which normally will be of a hemispherical configuration.

Figure 9 has been provided with an imaginary line A below which that part of the preform 44 serves to form the bottom of the bottle. It is to be noted that the ribs 45 are primarily formed on the lower part of the lower tubular portion 48 and are disposed in their entirety below the line A.

As is best shown in Figure 13, each of the ribs 45 is integrally formed with the tubular portion 48 and projects radially inwardly from the inner surface thereof. Further, each of the ribs 45 is in the form of an arcuate section.

Referring now to Figure 14, it will be seen that each rib 45 has an innermost surface 50 which is parallel to the longitudinal axis of the preform 44. Each rib 45 terminates in the closed end 49 by blending therewith in a natural transition due to the curvature of the closed end 49. The upper end of each rib 45 terminates in a rounded end portion 51 which is rounded longitudinally, as shown in Figure 14, and is rounded transversely in view of the natural curved section of the rib 45.

The preform 44 is injection molded within a mold assembly generally identified by the numeral 52. The mold assembly, except for a minor change therein, is the same mold assembly which has been utilized in the past for forming preforms suitable for the formation of champagne bottom bottles.

The mold assembly includes a cavity defining mold member 53 which has a sprue passage 54 opening into the lower end thereof, whereby plastics material may be introduced thereinto through a nozzle arrangement 55.

The upper end of the cavity defined by the mold member 53 has a continuation defined by a split neck mold assembly 56 which includes a pair of neck mold members 57. The neck mold members 57 are carried by a suitable mounting plate 58 which also functions as a support for the mold core member, generally identified by the numeral 59.

The mold core member 59 is of a configuration as is customarily provided for use in conjunction with the neck mold assembly 56 and the mold member 53. However, there has been a simple modification of the core member 59.

Referring now to Figures 11 and 12, it will be seen that the core member 59 includes a lower portion 60 which is of a constant circular cross section and which terminates in a generally spherical lower end 61. The core member 60 has been modified by the simple machining of rib forming grooves 62 which are circumferentially spaced about the part 60 and which extend down into and terminate within the end part 61. It will be seen that the grooves 62 are of a constant depth and are formed by merely machining the core member 59 starting at the bottom end thereof and continuing until the grooves 62 are of the desired height or longitudinal length. The grooves 62 may be conventionally formed by means of a simple milling cutter.

It will be readily apparent from Figure 10 that the preform 44 may be injection molded within the mold assembly 52 in a conventional manner. After the injection molding has been completed, the core member 59 is moved longitudinally relative to the fixed mold member 53 in the general direction of the arrow B so as to strip the preform 44 from the mold member 53.

It is to be understood that once the preform 44 has been formed, it may either be transferred to a blow mold while remaining on the core member 59, or it may be stripped from the core member 59 and later associated with a blow mold for molding into the desired bottle. It will be readily apparent that since the grooves 62 are disposed with their bottoms parallel to the longitudinal axis of the core member 59 and since they open through the lower end 61 of the core member 59 without any reduction in cross section, the preform 44 may be readily stripped from the core member 59 by a relatively longitudinal movement.

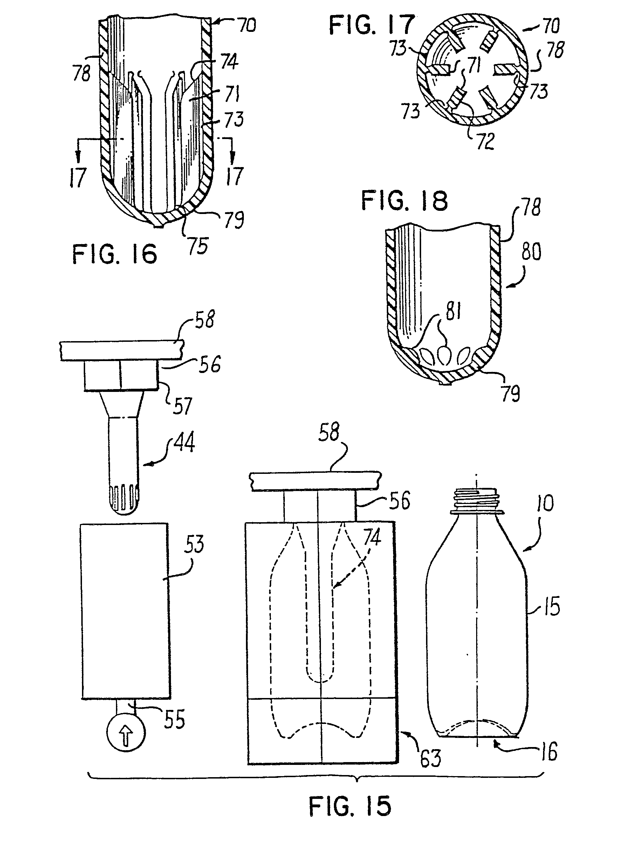

Referring now to Figure 15, it will be seen that the preform 44 is formed by injection molding in the manner illustrated in Figure 10. Thereafter, the preform is either transferred to a blow mold 63 while still on the core member 59, or by a separate support means (not shown). The blow mold 63 is preferably a split mold. However, the blow mold 63 is a conventional mold for forming a champagne bottom bottle which would be identical to the bottle 10 but without the internal reinforcing or stiffening ribs. The preform 44 is blow molded within the blow mold 63 in the customary manner to form the bottle 10. The bottle 10 is thereafter removed from the blow mold 63 and stripped from the carrier.

Reference is now made to Figures 16 and 17 wherein a modified form of preform is illustrated, the preform being generally identified by the numeral 70. The preform 70 is of the same general construction as the preform 44 and is modified only with respect to the formation of ribs on the interior thereof. In lieu of the ribs 45, the cylindrical lower portion 78 and hemispherical closed end 79 will be provided with ribs 71 which are much more pronounced than the ribs 44 and generally will be six in number instead of the illustrated eight of the preform 44. As is best shown in Figure 17, as compared to Figure 13, the ribs 71 are generally rectangular in cross section and extend more than 25% of the diameter of the cylindrical body portion 48. Further, at their line of joining to the cylindrical body portion 78, the ribs 71 are reduced in thickness as at 72 by shallow grooves 73 formed on opposite faces thereof.

The ribs 71 further differ from the ribs 45 in that, in lieu of having simple rounded upper ends, the ribs 71 have definitely sloping upper ends 74. The ribs 71 also do not terminate directly into the hemispherical closed end 49, but have radially inwardly curved lower portions 75.

The ribs 71 served the same function as the ribs 45, but require more material. The ribs will provide a much greater reinforcement. Further, the ribs in the final bottle (not shown) will project upwardly on the inner surface of the bottle bottom sufficiently to affect the flow of a liquid being placed into the bottle so as to reduce the turbulence of the liquid being filled into the bottle and thus greatly facilitate the filling process.

In Figure 18 there is illustrated yet another form of preform generally identified by the numeral 80. The preform 80 is also of a configuration similar to the preform 44 and differs therefrom only in the configuration of internal ribs 81. The ribs 81 are relatively short as compared to the ribs 45 and are so configured and positioned wherein, when the preform 80 is formed into a bottle, the ribs 81 will be in the area of the return bend between the generally cylindrical outer portion of the bottom and the radially inward and upward portion of the bottom, which area is generally the weakest part of the bottle and wherein inverting of the bottom under pressure would begin.

The ribs 81 are of a rounded cross section as are the ribs 45 and are formed in the illustrated embodiment of Figure 16 entirely on the inner surface of the hemispherical closed end 49.

In the bottom structure of the prior art there is a maximum thickness of the bottom structure in the area of the top apex and there may be an undue thinning of the junction ring at the extreme bottom of the bottle. The net result is that the bottom structure is unduly weak as compared to the remainder of the bottle and the conical bottom portion has a tendency to invert so that the bottom assumes an overall generally hemispherical cross section.

It will be readily apparent that any downward deformation of the conical bottom portion of the prior art bottle will result in an increase in the internal volume of the bottle with the resultant lowering of the level of the liquid within the bottle even though the volume of the contents of the bottle remains the same. It is therefore highly desirable that the bottom structure of the bottle 10 be rigidified so as to prevent this undesired distortion of the bottom structure.

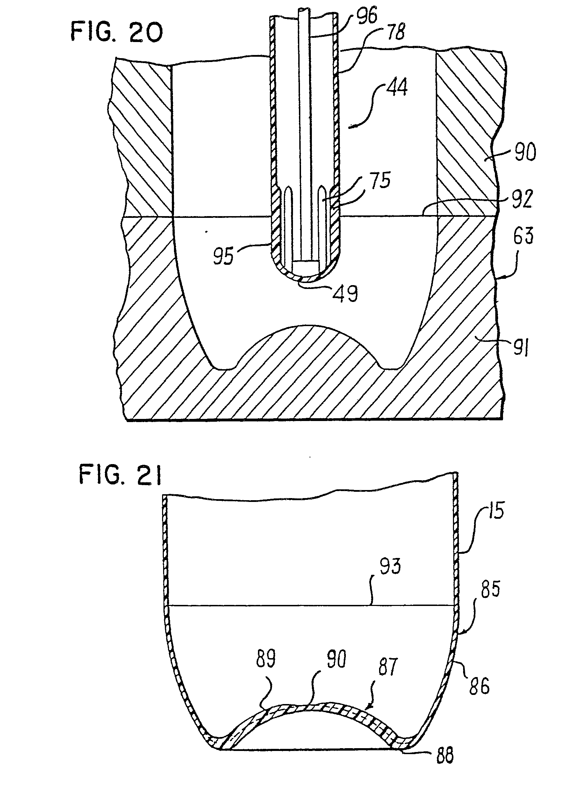

It has been proposed by applicants to strengthen the bottom structure by forming the same with internal ribs which are in the form of thickened material disposed on the inner surface of the bottom structure. Such a modified bottom construction is illustrated in Figure 21 and is generally identified by the numeral 85. The bottom structure 85 includes a truncated hemispherical upper portion 86, an internal conical portion 87, and a junction ring 88 joining the two. In addition, the bottom structure 85, particularly the conical portion 87 and the junction ring 88, is reinforced by circumferentially spaced radiating ribs 89 formed on the inner surface of the bottom structure 85, as is shown in Figure 21. The ribs 89 extend generally from the outer periphery of the top apex 90 of the conical portion 87 and across the junction ring 88, terminating in the outer wall 86 as shown.

The addition of the ribs 89 *per se* will not provide all of the advantages of this invention.

This invention also has to do with the advantageous results obtained through the provision of the ribs 89 in conjunction with the provision of a stretch rod axially to elongate the preform for the bottle. Most particularly, as will be specifically described hereinafter, it has been found that the mere provision of the ribs 89, together with the manner in which the preform for the bottle is worked upon, produces a much stronger bottom structure 85 than that which would be provided for by the addition of the ribs 89 alone.

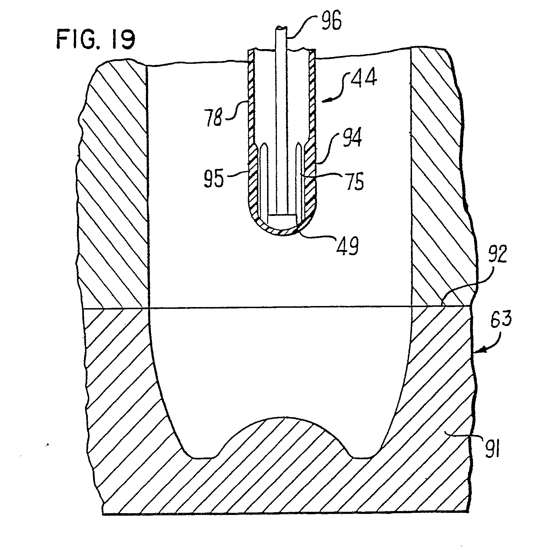

Referring now to Figure 19, it will be seen that there is illustrated the blow mold generally identified by the numeral 63 for forming bottles such as that of Figures 1, 15 and 21. The blow mold 63 includes an axially split body portion 90, a base portion 91, and the neck ring 56 (Figure 15). The base section 91 defines the bottom structure of a bottle blow molded therein and the parting line 92 between the mold sections 90 and 91 is identifiable in the finished bottle in a flash line 93.

In Figure 19 the mold 63 has illustrated therein a preform 44 from which the bottle of Figure 21 is blown. The preform 44 has the tubular body portion 78 which terminates in a lower bottom forming portion 94. The bottom forming portion 94 also includes a generally tubular body 95, which forms a continuation of the body 78. The body portion 95 terminates in the hemispherical bottom 49.

It will be seen that the preform 44 is of a length materially less than that of the cavity of the blow mold 33. Prior to the introduction of a gas under pressure into the preform 44 for effecting the blowing of the bottle, the preform 44 is axially stretched by means of a conventional stretch rod 96 as shown by a comparison of Figures 19 and 20. When the stretch rod 96 is elongated to effect the stretching of the preform 44, it has been found that instead of there being a uniform stretching of the preform 44 and a resultant uniform reduction of thickness of the overall body of the preform 44, when the body portion of the preform is reinforced by the ribs 75, the bottom forming portion of the preform 44 is stiffened and resists axial stretching with the result that the elongation of the preform 44 primarily is as a result of a stretching of the body portion 78. Thus the ribs 75 serve advantageously to reinforce the bottom forming portion of the preform and substantially eliminates stretching thereof during the stretching of the preform.

The net result is that when the preform is then blown within the mold 33, the bottom segment of the bottle, that is the portion of the bottle below the flash line 93, has thicker walls and is greatly strengthened in proportion to the amount of plastics material required for the ribs 75.

Most specifically, it has been found that in the formation of a 1 liter bottle where the bottom segment normally weighs between 12 and 13 grams, that the total weight of the added ribs 75 is on the order of 1/2 gram, the weight of the ribbed bottom section increases not from the 12—13 gram weight to the expected 12 1/2—13 1/2 gram weight, but to a 16—17 gram weight. In other words, the increase in weight of the bottom segment of the bottle is on the order of 4 grams for an increase of only 1/2 gram of plastics material. Further, the plastics material which has now been incorporated in the bottom structure of the bottle has been drawn from the body area of the bottle without a sacrifice in strength. In other words, by adding material in the form of webs weighing approximately 4% of the bottom segment weight, the bottom segment weight is increased on the order of 33%. This is highly advantageous and provides for a very stiff, high strength bottom with a minimum of added plastics material.

## Claims

1. A preform (44, 70, 80) for use in the blow molding of a plastics material bottle (10) having an internal reinforcing rib arrangement (22, 30, 41, 89) , characterised in that said preform is formed of a plastics material and includes a tubular lower portion (48, 78) terminating in a closed end (49, 79) and an arrangement of longitudinally extending ribs (45, 71, 81, 75) integrally formed on the inner surface of only said tubular lower portion (48, 78).

2. A preform according to claim 1 wherein said ribs (45, 71, 75, 81) extend into and terminate in said closed end (49, 79).

3. A preform according to claim 1 or 2 wherein said closed end (49, 79) is generally hemispherical and said ribs (45, 71, 75, 81) extend into and terminate in said closed end (49,79) in a natural transition due to the curvature of said closed end (49, 79).

4. A preform according to claim 1, 2 or 3 wherein said closed end (49) and a preselected part only of said tubular lower portion (48, 78) define means for forming a bottle bottom portion (94), and said ribs terminate remote from said closed end within said preselected part.

5. A preform according to any of claims 1 to 4 wherein each of said ribs (81) is part circular in cross section and has remote ends rounded in both a longitudinal and a transverse sense.

6. A preform according to claim 1 or 2 wherein said closed end (79) is generally hemispherical and said ribs (81) are disposed substantially entirely within the confines of said closed end.

7. A preform according to claim 1 or 2 wherein said ribs (71) are of a reduced thickness at their line of juncture (73) with the remainder of the preform (70).

8. A preform according to any of claims 1 to 7 wherein said ribs (71) have lower end portions (75) extending generally radially inwardly adjacent their juncture with said closed end (79).

9. A mold unit for injection molding a plastics material preform (44) for a blow molded bottle (10) wherein the preform has an internal arrangement of longitudinally extending ribs (45), characterised in that the mold unit (52) has a mould core member (59) having a lower portion (60) terminating in an end portion (61), and an arrangement of longittudinally extending rib-defining grooves (62) of limited longitudinal extent formed only in said core member lower portion (60), said grooves having longitudinally open lower ends.

10. A mold unit according to claim 9 wherein said end portion (61) is generally hemispherical and said grooves (62) terminate within said end portion in a natural transition due to the curvature of said end portion.

11. A mold unit according to claim 9 or 10 wherein said core member (59) has a longitudinal axis and said grooves (62) have radially innermost surfaces disposed parallel to said axis.

12. A mold unit according to claim 9, 10 or 11 wherein said mold unit (52) also includes a cavity-defining mold member (53) for receiving and cooperating with said mold core member (59), and said cavity being smooth in that portion thereof aligned with said mold core member lower portion (60) and end portion (61).

13. A method of forming a plastics material bottle (10) having a bottom (16) provided with radially extending internal stiffening ribs (22, 30, 41, 89), characterised in that said method comprises the steps of providing an injection mold unit (52) including a cavity-defining mold member (53) and a core member (59) in said cavity with said core member having an arrangement of rib-defining grooves (62) in a lower portion (60) only thereof; injection molding a plastics material tubular preform (44) in said cavity around said core member (59) with said preform (44) having a bottle bottom defining lower portion (48) with internal longitudinally extending ribs (45), terminating in said bottom portion (48), in accordance with said core member grooves (62), and then blow molding said preform (44) in a blow mold (63) to define a bottle (10) having a bottom with radially extending internal stiffening ribs (22) which terminate in said bottom.

14. A method of increasing the wall thickness of a bottom structure of a blow plastics material container (10), characterised in that said method comprises the steps of forming a preform (44) including a generally hemispherical bottom portion (49) and internal ribs (75) extending axially from said bottom portion in the area of the preform which corresponds to the bottom structure of the container, inserting the preform within a blow mold (63) for the container, holding an upper end of said preform against movement and moving the preform bottom portion (49) axially to axially stretch said preform with said stretching primarily occurring in an intermediate portion of said preform as opposed to occurring in the bottom portion of said preform, and thereafter blow molding said preform to form a container having a thicker than normal bottom structure.

15. The method of claim 14 wherein the increase in weight of said container bottom structure is of the order of 8 times the added weight of the internal ribs (75).

16. A blow molded plastics bottle (10) for beverages, said bottle being of the type including a tubular body portion (15) and an integral bottom structure (16, 25, 35, 85), said bottom structure including an internal axially inwardly directed generally conical portion (18, 27, 37, 87) and a generally arcuate cross-sectional axially inwardly opening base ring (20, 28, 38, 88), characterised in that said conical portion (18, 27, 37, 87) and said base ring (20, 28, 38, 88) are reinforced by a plurality of circumferentially spaced radially extending ribs (22, 30, 41, 89) integrally formed on the inner surface of both said generally conical portion (18, 27, 37, 87) and said base ring (20, 28, 38, 88) and bridging said base ring and terminating in said bottom structure (16, 25, 35, 85), and said ribs (22, 30, 41, 89) form means resisting thinning of said generally conical portions and said base ring during blow molding of said bottle (10) and providing for a greater wall thickness of said generally conical portion (18, 27, 37, 87) and said base ring (20, 28, 38, 88) between said ribs than in a like bottle formed in the same blow mold with the same preform but without ribs.

17. A bottle according to claim 16 wherein said bottom structure (16, 25, 35, 85) is of an increased weight on the order of 8 times the weight of said ribs (22, 30, 41, 89).

18. A bottle according to claims 16 or 17 wherein each of said ribs (22, 30, 41, 89) has end portions terminating in said conical portion (18, 27, 37, 87).

19. A bottle according to claim 16, 17 or 18 wherein said bottom structure (16, 25, 35, 85) also includes an outer portion (17, 26, 36, 86) joined to said base ring (20, 28, 38, 88), and said ribs (22, 30, 41, 89) terminating in said outer portion.

20. A bottle according to claim 19 wherein each of said ribs (30) has end portions terminating respectively in said bottom outer portions (26) and said conical portion (27) immediately adjacent said base ring (28).

21. A bottle according to claim 19 wherein each of said ribs (22, 41, 30, 89) has an outer end portion (24, 43, 32) terminating in said bottom structure outer portion (17, 26, 36, 86) closely adjacent said base ring (20, 28, 38, 88) and an inner end portion (23, 42, 31) terminating in said conical portion (18, 27, 37, 87).

22. A bottle according to claim 21 wherein each of said ribs (22, 41) has an outer end portion (24, 43) terminating in said outer portion (17, 36) closely adjacent said base ring (20, 38) and an inner end portion (23, 42) terminating in said conical portion (18, 37) remote from said base ring (20, 38).

23. A bottle according to any of claims 16 to 22 wherein said conical portion (18) includes an uppermost thickened dome (21), and said inner ends (23) of said ribs (22) terminate adjacent said dome.

24. A bottle according to any of claims 16 to 23 wherein each rib (22, 30, 41, 89) is generally semicircular in cross section.

25. A bottle according to any of claims 16 to 22 wherein each rib (30) is generally teardrop shape in plan and has a rounded nose (31) terminating in said conical portion (27).

26. A bottle according to any of claims 16 to 25 wherein each rib (22, 30, 89) is generally elongated oval in plan.

27. A bottle according to any of claims 16 to 23 wherein each rib (41) is generally rectangular in cross section and forms flow guiding means for a liquid when said bottle (10) is being filled.

28. A bottle according to claim 19 or any of claims 20 to 27 when appendant to claim 19 wherein said outer portion (17, 26, 36, 86) is a truncated hemispherical sector merging at the upper end thereof into said cylindrical body portion (15).

29. A bottle according to any of claims 16 to 28 wherein there is a decrease in the wall thickness of said body portion (15).

30. A bottle according to any of claims 16 to 29 wherein said ribs (22, 30, 41, 89) have inner ends terminating in spaced relation.

**Revendications**

1. Ebauche (44, 70, 80) destinée à être utilisée pour le moulage par soufflage d'une bouteille en matière plastique (10) comprenant un agencement à nervures de renfort internes (22, 30, 41, 89), caractérisée en ce qu'elle est constituée en une matière plastique et comprend une partie inférieure tubulaire (48, 78) se terminant en une extrémité fermée (49, 79), et un agencement de nervures s'étendant longitudinalement (45, 71, 81, 75), formées d'un seul tenant uniquement sur la surface interne de ladite partie tubulaire inférieure (48, 78).

2. Ebauche selon la revendication 1, caractérisée en ce que lesdites nervures (45, 71, 75, 81) s'étendent et se terminent dans ladite extrémité fermée (49, 79).

3. Ebauche selon la revendication 1 ou 2, caractérisée en ce que ladite extrémité fermée (49, 79) est généralement hémisphérique et en ce que lesdites nervures (45, 71, 75, 81) s'étendent et se terminent dans ladite extrémité fermée (49, 79) en formant une transition naturelle due à la courbure de ladite extrémité fermée (49, 79).

4. Ebauche selon la revendication 1, 2 ou 3, caractérisée en ce que ladite extrémité fermée (49) d'une partie présélectionnée seulement de ladite partie inférieure tubulaire (48, 78) définit les moyens pour former une partie de fond de bouteille (94), et lesdites nervures se terminent en un endroit éloigné de ladite extrémité fermée à l'intérieur de ladite partie présélectionnée.

5. Ebauche selon l'une quelconque des revendications 1 à 4, caractérisée en ce que chacune desdites nervures (81) est de section en partie circulaire et comprend des extrémités éloignées arrondies aussi bien dans un sens longitudinal que dans un sens transversal.

6. Ebauche selon la revendication 1 ou 2, caractérisée en ce que ladite extrémité fermée (79) est généralement hémisphérique et en ce que lesdites nervures (81) sont disposées pratiquement totalement à l'intérieur des limites de ladite extrémité fermée.

7. Ebauche selon la revendication 1 ou 2, caractérisée en ce que lesdites nervures (71) sont d'épaisseur réduite dans leur ligne de jonction (73) avec le reste de l'ébauche (70).

8. Ebauche selon l'une quelconque des revendications 1 à 7, caractérisée en ce que lesdites nervures (71) ont des parties d'éxtrémité inférieures (75) s'étendant généralement radialement vers l'intérieur, au voisinage de leur jonction avec ladite extrémité fermée (79).

9. Moule pour moulage par injection d'une ébauche en matière plastique (44) pour mouler par soufflage une bouteille (10), l'ébauche comprenant un agencement interne de nervures (45) s'étendant longitudinalement, caractérisé en ce qu'il comprend un noyau de moule (59) comportant une partie inférieure (60) se terminant en une partie d'extrémité (61), et un agencement de gorges (62) définissant les nervures et s'étendant longitudinalement, de longueur longitudinale limitée, formées seulement dans ladite partie inférieure (60) du noyau, lesdites gorges ayant des extrémités inférieures ouvertes longitudinalement.

10. Moule selon la revendication 9, caractérisé en ce que ladite partie d'extrémité (61) est généralement hémisphérique et en ce que lesdites gorges (62) se terminent à l'intérieur de ladite partie d'extrémité selon une transition naturelle due à la courbure de ladite partie d'extrémité.

11. Moule selon la revendication 9 ou 10, caractérisé en ce que ledit noyau (59) comprend un axe longitudinal et en ce que lesdites gorges (62) ont des surfaces qui sont le plus à l'intérieur en direction radiale, disposées parallèlement audit axe.

12. Moule selon la revendication 9, 10 ou 11, caractérisé en ce qu'il comprend également un élément de moule (53) définissant une cavité pour recevoir et coopérer avec ledit noyau (59), et en ce que ladite cavité est lisse dans sa partie qui est en alignement avec ladite partie inférieure du noyau de moule (60) et la partie d'éxtrémité (61).

13. Procédé de formage de bouteilles en matière plastique (10) comprenant un fond (16) muni de nervures de raidissement internes (22, 30, 41, 89) s'étendant radialement, caractérisé en ce qu'il comprend les opérations consistant à prévoir un moule d'injection (52) comportant un élément de moule (53) définissant une cavité et un noyau (59) dans ladite cavité, ledit noyau comprenant un agencement de gorges (62) définissant des nervures seulement dans une partie inférieure (60) de celui-ci; le moulage par injection d'une ébauche tubulaire (44) en matière plastique dans ladite cavité autour dudit royau (59), ladite ébauche (44) comprenant une partie inférieure (48) définissant un fond de bouteille avec des nervures internes (45) s'étendant longitudinalement, se terminant dans ladite partie de fond (48), en accord avec lesdites gorges (62) du noyau, et ensuite le moulage par soufflage de ladite ébauche (44) dans un moule de soufflage (63) pour définir une bouteille (10) comprenant un fond avec des nervures de raidissement internes (22) s'étendant radialement et se terminant dans ledit fond.

14. Procédé pour augmenter l'épaisseur de paroi d'une structure de bouteille, d'un récipient (10) en matière plastique soufflée, caractérisé en ce qu'il comprend les opérations consistant à former une ébauche (44) comprenant une partie de fond (49) généralement hémisphérique et des nervures internes (75) s'étendant axialement à partir de ladite partie de fond dans la région de l'ébauche qui correspond à la structure de fond du récipient, à insérer l'ébauche à l'intérieur du moule de soufflage (69) destiné au récipient, à maintenir l'extrémité supérieure de ladite ébauche pour lui interdire tout mouvement et à déplacer la partie de fond de l'ébauche (49) axialement pour étirer axialement ladite ébauche, cet étirage s'effectuant en premier lieu dans une partie intermédiaire de ladite ébauche et non dans sa partie de fond, et ensuite à mouler par soufflage ladite ébauche pour former un récipient ayant une structure de fond plus épaisse que la normale.

15. Procédé selon la revendication 14, caractérisé en ce que l'augmentation de poids de ladite structure de fond du récipient est de l'ordre de huit fois le poids ajouté des nervures internes (75).

16. Bouteille en matière plastique (10) pour boissons, moulée par soufflage, du type comprenant un corps tubulaire (15) et une structure de fond en faisant partie intégrante (16, 25, 35, 85), et comprenant une partie interne généralement conique (18, 27, 37, 87) et dirigée axialement vers l'intérieur et un anneau de base (20, 28, 38, 88) s'ouvrant axialement vers l'intérieur et de section généralement courbe, caractérisée en ce que ladite partie conique (18, 27, 37, 87) et ledit anneau de base (20, 28, 38, 88) sont renforcés par plusieurs nervures (22, 30, 41, 89) s'étendant radialement et espacées circonférentiellement, formées d'un seul tenant sur la surface interne de ladite partie généralement conique (18, 27, 37, 87) et également dudit anneau de base (20, 28, 38, 88) et surmontant celui-ci en se terminant dans ladite structure de fond (16, 25, 35, 85), et lesdites nervures (22, 30, 41, 89) formant des moyens résistant à l'amincissement de ladite partie généralement conique et dudit anneau de base pendant le moulage par soufflage de ladite bouteille (10) et déterminant une épaisseur de paroi plus importante de ladite partie généralement conique (18, 27, 37, 87) et dudit anneau de base (20, 28, 38, 88) entre lesdites nervures que dans une bouteille analogue formée dans le même moule par soufflage avec la même ébauche mais sans nervures.

17. Bouteille selon la revendication 16, caractérisée en ce que ladite structure de fond (16, 25, 35, 85) est d'une poids plus important, de l'ordre de huit fois le poids desdites nervures (22, 30, 41, 89).

18. Bouteille selon la revendication 16 ou 17, caractérisée en ce que chacune desdites nervures (22, 30, 41, 89) comprend des parties d'extrémité se terminant dans ladite partie conique (18, 27, 37, 87).

19. Bouteille selon la revendication 16, 17 ou 18, caractérisée en ce que ladite structure de fond (16, 25, 35, 85) comprend également une partie externe (17, 26, 36, 86) reliée audit anneau de base (20, 28, 38, 88), et en ce que lesdites nervures (22, 30, 41, 89) se terminent dans ladite partie externe.

20. Bouteille selon la revendication 19, caractérisée en ce que chacune desdites nervures (30) comprend des parties d'éxtrémité se terminant respectivement dans ladite partie externe de fond (26) et ladite partie conique (27) immédiatement adjacente audit anneau de base (28).

21. Bouteille selon la revendication 19, caractérisée en ce que chacune desdites nervures (22, 41, 30, 89) comprend une partie d'extrémité externe (24, 43, 32) se terminant dans ladite partie externe (17, 26, 36, 86) de la structure de fond, à proximité étroite dudit anneau de base (20, 28, 38, 88) et dans une partie d'extrémité interne (23, 42, 31) se terminant dans ladite partie conique (18, 27, 37, 87).

22. Bouteille selon la revendication 21, caractérisée en ce que chacune desdites nervures (22, 41) comprend une partie d'extrémité externe (24, 43) se terminant dans ladite partie externe (17, 36) étroitement adjacente audit anneau de base (20, 38) et une partie d'extrémité interne (23, 42) se terminant dans ladite partie conique (18, 37) éloignée dudit anneau de base (20, 38).

23. Bouteille selon l'une quelconque des revendications 16 à 22, caractérisée en ce que ladite partie conique comprend un dôme (21) épaissi dans sa partie supérieure et en ce que lesdites extrémités (33) desdite nervures (22) se terminent à proximité dudit dôme.

24. Bouteille selon l'une quelconque des revendications 16 à 23, caractérisée en ce que chaque nervure (22, 30, 41, 89) est de section généralement semi-circulaire.

25. Bouteille selon l'une quelconque des revendications 16 à 22, caractérisée en ce que chaque nervure (30) a généralement la forme en plan d'une larme et comprend un nez arrondi (31) se terminant dans ladite partie conique (27).

26. Bouteille selon l'une quelconque des revendications 16 à 25, caractérisée en ce que chaque nervure (22, 30, 89) est généralement de forme ovale allongée en plan.

27. Bouteille selon l'une quelconque des revendications 16 à 23, caractérisée en ce que chaque nervure (41) est généralement de section rectangulaire et forme des moyens de guidage de courant pour un liquide quand ladite bouteille (10) es remplie.

28. Bouteille selon la revendication 19 ou l'une quelconque des revendications 20 à 27 quand elles sont rapportées à la figure 19, caractérisée en ce que ladite partie externe (17, 26, 36, 86) est un secteur hémisphérique tronconique se fusionnant à son extrémité supérieure avec ladite partie de corps cylindrique (15).

29. Bouteille selon l'une quelconque des revendications 16 à 28, caractérisée en ce qu'il y a diminution de l'épaisseur de paroi du corps (15).

30. Bouteille selon l'une quelconque des revendications 16 à 29, caractérisée en ce que lesdites nervures (22, 30, 41, 89) ont des extrémités internes se terminant de façon régulièrement espacée.

**Patentansprüche**

1. Vorformling (44, 70, 80) für die Verwendung beim Blasformen einer Flasche (10) aus Kunststoff, die eine innenliegende Verstärkungsrippen-Anordnung (22, 30, 41, 89) besitzt, dadurch gekennzeichnet, daß der Vorformling aus Kunststoff geformt is und einen rohrförmigen unteren Bereich (48, 78), der in einem abgeschlossenen Ende (49, 79) endet und eine Anordnung längsverlaufender Rippen (45, 71, 81, 75) enthält, die an der Innenfläche nut dieses rohrförmigen unteren Bereiches (48, 78) einstückig geformt sind.

2. Vorformling nach Anspruch 1, dadurch gekennzeichnet, daß die Rippen (45, 71, 75, 81) in das abgeschlossene Ende (49, 79) hineinreichen und dort enden.

3. Vorformling nach Anspruch 1 oder 2, dadurch gekennzeichnet, daß das abgeschlossene Ende (49, 79) im wesentlichen halbkugelförmig ist und die Rippen (45, 71, 75, 81) in das abgeschlossene Ende (49, 79) hineinreichen und dort durch die Krümmung des abgeschlossenen Endes (49, 79) in einem natürlichen Übergang enden.

4. Vorformling nach Anspruch 1, 2 oder 3, dadurch gekennzeichnet, daß das abgeschlossene Ende (49) und ein vorgegebener Teil nur des rohrförmigen unteren Bereichs (48, 78) Mittel zum Formen eines Flaschenbodenbereichs (94) bilden und daß die Rippen von dem abgeschlossenen Ende entfernt innerhalb des vorgegebenen Teils enden.

5. Vorformling nach einem der Ansprüche 1 bis 4, dadurch gekennzeichnet, daß jede der Rippen (81) im Querschnitt kreisabschnittförmig ist und voneinander entfernt liegende Enden besitzt, die sowohl in Längs- als auch in Querrichtung abgerundet sind.

6. Vorformling nach Anspruch 1 oder 2, dadurch gekennzeichnet, daß das abgeschlossene Ende (79) im wesentlichen halbkugelförmig ist und die Rippen (81) im wesentlichen gänzlich innerhalb des Gebietes des abgeschlossenen Endes angeordnet sind.

7. Vorformling nach Anspruch 1 oder 2, dadurch gekennzeichnet, daß die Rippen (71) längs ihrer Verbindungslinie (73) mit dem übrigen Teil des Vorformlings (70) verjüngt sind.

8. Vorformling nach einem der Ansprüche 1 bis 7, dadurch gekennzeichnet, daß die Rippen (71) untere Endbereiche (75) besitzen, die sich unmittelbar neben ihrer Verbindung mit dem abgeschlossenen Ende (79) im wesentlichen radial nach innen erstrecken.

9. Formwerkzeug zum Herstellen eines Vorformlings (44) aus Kunststoff im Spritzgußverfahren für eine in Blasformverfahren hergestellte Flasche (10), wobei der Vorformling eine innenliegende Anordnung längsverlaufender Rippen (45) besitzt, dadurch gekennzeichnet, daß das Formwerkzeug (52) einen Formdorn (59), der einen unteren Bereich (60), der in einem Endbereich (61) endet, hat, und eine Anordnung längsverlaufender, die Rippen bildender Nuten (62) mit begrenzter Längserstreckung besitzt, die nur im unteren Bereich (60) des Formdorns geformt sind, wobei die Nuten in Längsrichtung offéne untere Enden besitzen.

10. Formwerkzeug nach Anspruch 9, dadurchgekennzeichnet, daß das Endstück (61) im wesentlichen halbkugelförmig ist und die Nuten (62) innerhalb des Endbereichs durch dessen Krümmung in einem natürlichen Übergang enden.

11. Formwerkzeug nach Anspruch 9 oder 10, dadurch gekennzeichnet, daß der Formdorn (59) eine längsverlaufende Achse besitzt und die Nuten (62) radial innerste Flächen besitzen, die parallel zu der Achse angeordnet sind.

12. Formwerkzeug nach Anspruch 9, 10 oder 11, dadurch gekennzeichnet, daß das Formwerkzeug (52) auch eine einen Hohlraum begrenzende Form (53) zur Aufnahme des und zum Zusammenwirken mit dem Formdorn (59) aufweist und daß der Hohlraum in demjenigen Bereich, der mit dem unteren Bereich (60) und dem Endbereich (61) des Formdorns fluchtet, glatt ist.

13. Verfahren zum Formen einer Flasche (10) aus Kunststoff mit einem Boden (16), der mit sich radial erstreckenden, innenliegenden Verstärkungsrippen (22, 30, 41, 89) versehen ist, dadurch gekennzeichnet, daß es folgende Schritte enthält:

Vorsehen eines Spritzformwerkzeuges (52), das eine einen Hohlraum begrenzende Form (53) und einen Formdorn (59) in diesem Hohlraum enthält, wobei dieser Formdorn nur in seinem unteren Bereich (60) eine Anordnung Rippen bildender Nuten (62) besitzt; Spritzgießen eines rohrförmigen Vorformlings (44) aus Kunststoff in dem Hohlraum um den Formforn (59), wobei der Vorformling (44) einen einen Flaschenboden bildenden unteren Bereich (48) mit innenliegenden längsverlaufenden Rippen (45) besitzt, die entsprechend den Nuten (62) des Formdorns in diesem Bodenbereich (48) enden; und anschließend Blasformen des Vorformlings (44) in einer Blasform (63) um eine Flasche (10) zu bilden, die einen Boden mit sich radial erstreckenden, innenliegenden Verstärkungsrippen (22) besitzt, die in diesem Boden enden.

14. Verfahren zum Vergrößern der Wandstärke einer Bodenstruktur eines geblasenen Kunststoffbehälters (10), dadurch gekennzeichnet, daß das Verfahren folgende Schritte enthält:

Formen eines Vorformlings (44), der einen im wesentlichen halbkugelförmigen Bodenbereich (40) und innenliegende Rippen (75) besitzt, die sich von diesem Bodenbereich in das Gebiet des Vorformlings axial erstrecken, der der Bodenstruktur des Behälters entspricht;

Einführen des Vorformlings in eine Blasform (63) für den Behälter;

Festhalten eines oberen Endes des Vorformlings gegen Verrücken und axiales Vorbewegen des unteren Bereich (49) des Vorformlings zum axialen Strecken des Vorformlings, wobei dieses Strecken hauptsächlich in einem Zwischenbereich anstatt im unteren Bereich des Vorformlings geschieht;

und anschließendes Blasformen des Vorformlings, um einen Behälter mit einer gegenüber einer normalen eine dickere Bodenstruktur zu formen.

15. Verfahren nach Anspruch 14, dadurch gekennzeichnet, daß die Gewichtszunahme der Bodenstruktur des Behälters in der Größenordnung des 8-fachen des zusätzlichen Gewichtes der innenliegenden Rippen (75) beträgt.

16. Blasgeformte Flasche (10) aus Kunststoff für Getränke mit einem rohrförmigen Körper (15) und einer einstückigen Bodenstruktur (16, 25, 35, 85), die einen innenliegenden, axial nach innen gerichteten, im wesentlichen konischen Bereich (18, 27, 37, 87) und einen im Querschnitt im wesentlichen bogenförmigen, in axialer Richtung nach innen sich erweiternden Sockelring (20, 28, 38, 88) enthält, dadurch gekennzeichnet, daß der konische Bereich (18, 27, 37, 87) und der Sockelring (20, 28, 38, 88) durch eine Vielzahl von umfangsseitig im Abstand angeordneten, sich radial erstreckenden Rippen (22, 30, 41, 89) verstärkt sind, die einstückig auf der Innenfläche sowohl des im wesentlichen konischen Bereichs (18, 27, 37, 87) als auch des Sockelrings (20, 28, 38, 88) geformt sind und den Sockelring überbrücken und in der Bodenstruktur (16, 25, 35, 85) enden, und daß die Rippen (22, 30, 41, 89) Mittel bilden, die einer Verdünnung des im wesentlichen konischen Bereichs und des Sockelrings während des Blasformens der Flasche (10) entgegenstehen und die für eine größere Wandstärke des im wesentlichen konischen Teils (18, 27, 37, 87) und des Sockelrings (20, 28, 38, 88) zwischen den Rippen sorgen, gegenüber einer ähnlichen Flasche, die in derselben Blasform mit demselben Vorformling aber ohne Rippen geformt ist.

17. Flasche nach Anspruch 16, dadurch gekennzeichnet, daß die Bodenstruktur (16, 25, 35, 85) ein erhöhtes Gewicht in der Größenordnung des 8-fachen des Gewichtes der Rippen (22, 30, 41, 89) besitzt.

18. Flasche nach Anspruch 16 oder 17, dadurch gekennzeichnet, daß jede der Rippen (22, 30, 41, 89) Endbereiche besitzt, die im konischen Bereich (18, 27, 37, 87) enden.

19. Flasche nach Anspruch 16, 17 oder 18, dadurch gekennzeichnet, daß die Bodenstruktur (16, 25, 35, 85) auch einen äußeren Bereich (17, 26, 36, 86), der mit dem Sockelring (20, 28, 38, 88) verbunden ist, enthält und daß die Rippen (22, 30, 41, 89) in diesem äußeren Bereich enden.

20. Flasche nach Anspruch 19, dadurch gekennzeichnet, daß jede der Rippen (30) Endbereich besitzt, die in dem bodenseitigen äußeren Teil (26) bzw. in dem konischen Bereich (27) unmittelbar neben dem Sockelring (28) enden.

21. Flasche nach Anspruch 19, dadurch gekennzeichnet, daß jede der Rippen (22, 41, 30, 89) einen äußeren Endbereich (24, 43, 32), der in dem äußeren Teil (17, 26, 36, 86) der Bodenstruktur nahe dem Sockelring (20, 28, 38, 88) endet, und einen inneren Endbereich (23, 42, 31) besitzt, der in dem konischen Bereich (18, 27, 37, 87) endet.

22. Flasche nach Anspruch 21, dadurch gekennzeichnet, daß jede der Rippen (22, 41) einen äußeren Endbereich (24, 43), der in dem äußeren Bereich (17, 36) nahe dem Sockelring (20, 38) endet, und einen inneren Endbereich (23, 42) besitzt, der im konischen Bereich (18, 37) vom Sockelring (20, 38) entfernt endet.

23. Flasche nach einem der Ansprüche 16 bis 22, dadurch gekennzeichnet, daß der konische Bereich (18) eine zu oberst gelegene verdickte Kuppe (21) enthält und daß die inneren Enden (23) der Rippen (22) der Kuppe benachbart enden.

24. Flasche nach einem der Ansprüche 16 bis 23, dadurch gekennzeichnet, daß jede Rippe (22, 30, 41, 89) im Querschnitt im wesentlichen halbkreisförmig ist.

25. Flasche nach einem der Ansprüche 16 bis 25, dadurch gekennzeichnet, daß jede Rippe (30) in Draufsicht im wesentlichen tropfenförmig ist und eine gerundete Nase (31) besitzt, die im konischen Bereich (27) endet.

26. Flasche nach einem der Ansprüche 16 bis 25, dadurchgekennzeichnet, daß jede Rippe (22, 30, 89) in Draufsicht im wesentlichen länglich oval ist.

27. Flasche nach einem der Ansprüche 16 bis 23, dadurch gekennzeichnet, daß jede Rippe (41) im Querschnitt im wesentlichen lotrecht ist und Führungsmittel für eine Flüssigkeit bildet, wenn die Flasche (10) gefüllt ist.

28. Flasche nach Anspruch 19 oder einem der Ansprüche 20 bis 27, wenn er vom Anspruch 19 abhängig ist, dadurch gekennzeichnet, daß der äußere Bereich (17, 26, 36, 86) ein abgeschnittener Halbkugelabschnitt ist, der an seinem oberem Ende in den zylindrischen Körperbereich (15) übergeht.

29. Flasche nach einem der Ansprüche 16 bis 28, gekennzeichnet durch eine Abnahme der Wandstärke des Körperbereichs (15).

30. Flasche nach einem der Ansprüche 16 bis 29, dadurch gekennzeichnet, daß die Rippen (20, 30, 41, 89) innere Enden besitzen, die in einem Abstand voneinander enden.

FIG. 1

FIG. 2

FIG. 4

FIG. 3

FIG. 5

**0 029 639**

FIG. 6

FIG. 7

FIG. 8

2

FIG. 9

FIG. 10

FIG. 12

FIG. 11

FIG. 13

FIG. 14

FIG. 16

FIG. 17

FIG. 18

FIG. 15

FIG. 19

96

44

78

94

75

95

49

92

63

91

FIG. 20

FIG. 21